# EUROPEAN PATENT SPECIFICATION

(11) **EP 4 311 080 B1**
(45) Date of publication and mention of the grant of the patent: **21.10.2026**
(21) Application number: 23187125.2
(22) Date of filing: 21.07.2023
(51) Int. Cl.: H02K 3/26, H02K 3/28, H02K 21/24

(54) **MULTIPHASE STATOR WINDING ON A PRINTED CIRCUIT BOARD**
MEHRPHASIGE STATORWICKLUNG AUF EINER LEITERPLATTE
BOBINAGE DE STATOR MULTIPHASÉ SUR UNE CARTE DE CIRCUIT IMPRIMÉ

(30) Priority: 22.07.2022 WO PCT/RU2022/000232
(43) Date of publication of application: 24.01.2024
(73) Proprietor: Elfuturis LDA, 3030-199 Coimbra (PT)
(72) Inventor: Kozlov, Dmitry, 191015 Saint-Petersburg (RU)
(74) Representative: do Nascimento Gomes, Rui

(56) References cited:
- GB-A- 2 485 185
- KR-A- 20100 063 726
- US-B2- 6 998 751
- US-B2- 7 112 910
- US-B2- 7 623 013

## Description

### Technical area

The invention belongs to the electric power industry. It can be applied to electric machines with axial flux, in particular for axial alternators in the range of up to 100 kW used in wind turbines, hydro generators, mobile or mounted generators in power propulsion systems.

It can also be used in axial or linear motors, especially in electric vehicles, as well as in any technical field requiring a controlled electrical drive.

### Prior art

A known stator winding is used in a low-speed magnetoelectric generator, which is an armature winding on the outer surface of the stator in the form of flat copper printed circuit boards (PCBs) stacked in three layers and insulated with a composite material (Utility Model Patent RF 157778, publ. 10.12 .2015) [1]. In the known solution, the entire area of the PCB is not used for the placement of the phase meander-type winding, which reduces the efficiency of the electromagnetic interaction between the stator and the rotor of the electric machine. The design of the known phase winding also does not imply the possibility of series and/or parallel connection of several boards into a unified phase winding to increase the number of turns in the winding or the total cross-sectional area of the conductor in order to adapt the stator parameters to various technical requirements.

A known stator winding is used in the stator of a rotary electric machine with an axial field. The winding is placed on conductor layers made on PCBs. Each conductor layer contains a set of radial conductors, a pair of external conductors, and many internal ones (Patent for the invention 2294588, Russian Federation, publ. 27.02.2006) [2]. The design of the known winding has a considerable number of internal connections and a high technological complexity of assembly, which significantly reduces the reliability of the winding as a whole. The conductor layers of the winding are not fully completed by radial conductors, also due to a large number of internal connections, which leads to inefficient use of the active area of the conductor layer and additional electrical losses.

A known phase winding is used in the stator of an electric machine containing PCBs with a large number of electrically conductive coils interconnected inside the PCB (international application WO2019190959, publ. 03.10.2019) [3]. The known stator is characterized by the high complexity of commutation of the phase windings, implemented through many metalized holes and pre-prepared terminal pads. The use of these pads with holes limits the possibility of adding more phase layers to achieve the specified stator parameters. The coils of the stator winding on PCBs have a high specific length of the passive frontal parts, resulting in inefficient use of the area of the boards and additional electrical losses.
A known three-phase PCB stator winding is used in an electromagnetic moving system, and each phase winding is placed on two layers with spiral coils series connected in series using center and peripheral points (US patent US 7,623,013 B2, publ. 24.11.2009). In the given solution, winding coils are not identical and have an opposite wound direction. Accordingly, such configuration of coils, being combined in pairs, is equal to a regular series connection of identical coils, where a number of coils corresponds to a number of magnetic pole pairs, and which additionally leads to a significant elongation of the passive parts of the coil, limited PCB area used by the active radial parts and an increase of winding dimensions. Such solution does not enable universal series and/or parallel connection of one PCB with another into one stack of the unified stator winding.
A known single-phase stator winding provided on one or two spaced apart double-layer PCBs is used in a brushless DC electric motor, and the PCB on each layer comprises spiral coils with same wound direction arranged in pairs (US patent US 7,112,910 B2, publ. 26.09.2006). A known single-phase stator winding on multilayer PCB is used in a man powered slim charger, where series connection of coils and layers is implemented by employing plated-through holes in the center of the coils, and a doubled number of plated-through holes determines the number of layers connected in series (Korean patent publication KR 2010 0063726 A, publ. 11.06.2010). A known two independent single-phase PCB windings is used in a high reliability electric drive, where each of such windings is placed on two layers, and together they are located on a single four-layer PCB with two plated-through holes in the center of the coils for their connections (US patent US6998751B2, publ. 14.02.2006). A known n-phase winding on a multilayer PCB is provided in an axial gap electrical machine having an integrated stator, where each phase winding is placed on at least two layers of the PCB (as of the UK patent application GB 2 485 185 A, publ. 09.05.2012). In a single-phase embodiment, a series connection of coils and layers in the winding is proposed by using plated-through holes in the center of the coils, and a doubled number of plated-through holes determines the number of layers connected in series. In all such four disclosures, besides an absence of multiphase stator winding option is clearly evident, the given solutions do not offer a possibility of universal series and/or parallel connection of one PCB with another into one unlimited stack of the unified multiphase stator winding.

### Summary of the Invention

The present invention provides an innovative variation of the stator winding of an axial or linear electric machine made with windings in the form of coils of electrically conductive tracks on a printed circuit board.

The present invention thus comprises a multiphase stator winding implemented on a printed circuit board (PCB) according to claim 1.

The electrically conductive tracks of each phase winding are grouped into identical coils according to a number of electric machine poles.

Each coil comprises a reference part on a main layer of the PCB phase winding and a series-connected mating part on a complementary layer of the PCB phase winding.

The beginnings of the first and the last coils in the phase winding located on the main layer are connected to output terminals of the beginning and the end of the phase winding, respectively.

The said reference and mating parts of each coil except mating parts of the first and the last coils are connected with corresponding parts of previous and next coils, forming related pairs on a same layer and closing an electrical series circuit of coils into a phase winding.

Except beginnings of the first and the last coils which are connected to the output terminals, each of the said coils are connected in a counter-series manner where the beginning of one coil is connected to the beginning of a next coil, and the end of one coil is connected to the end of an adjacent coil.

The stator winding comprises more than one multilayer PCB, wherein each phase winding is made with an additional angular offset of 90 electrical degrees for series and/or parallel connection of the phase windings of another identical multilayer PCB, the several PCBs being integrated into a single unified stator winding by means of the connection of output terminals of the several PCB.

At least one of the output terminals is located above and connected to one other output terminal.

A PCB may be a ring-shaped PCB.

Output terminals may be located on a ring-shaped PCB within an area between an outer edge of such PCB and an external border of a winding.

Alternatively, output terminals may be located on a ring-shaped PCB within an area between an inner edge of such PCB and the internal border of a winding.

A stator winding may be made as a planar unfolded winding on a respective PCB.

The present invention may also include one or more uses of the multiphase stator of the present disclosure, in particular in an axial or linear motors or alternators.

The said motor may be provided in an electric vehicle or a controlled electrical drive.

The alternator may be provided in a wind turbine, hydro generator, or mobile or mounted generator in a power propulsion system.

The present invention provides a stator winding with a high efficiency, in using the area of printed circuit boards (PCB) to accommodate phase windings and respective active components, reducing electric losses of the phase windings, and enabling the connection of several multilayer PCBs into a unified stator winding to increase the number of turns of a phase winding and/or increase the total cross-sectional area of the conductive tracks for the adaptation of stator parameters to various technical requirements; as well as in simplifying the design of the phase windings.

The technical results achieved by the claimed invention are to minimize the value of resistance of each phase winding and to reduce the overall dimensions of the coils and the stator winding as a whole.

### Brief description of the drawings

The design of the claimed invention is illustrated by the drawings of six layers of the multilayer PCB three-phase stator winding of conventional and inverted types of the axial electric machine.
Figure 1.

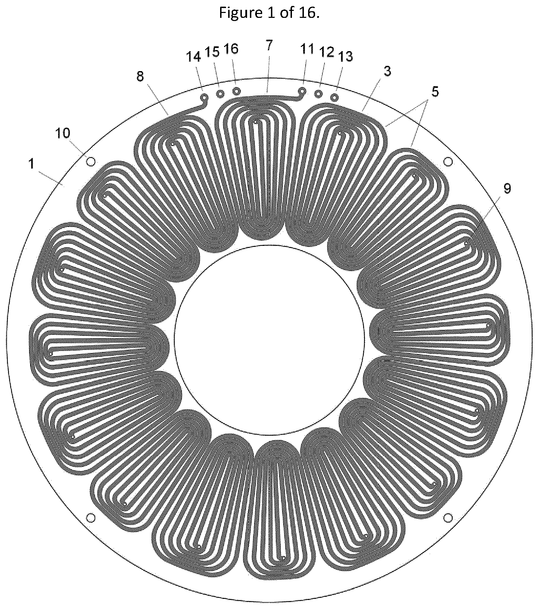

   Fig. 1 shows the first layer of the multilayer PCB with the reference parts of the coils of the phase A stator winding intended for the conventional type of the axial electric machine.
Figure 2.

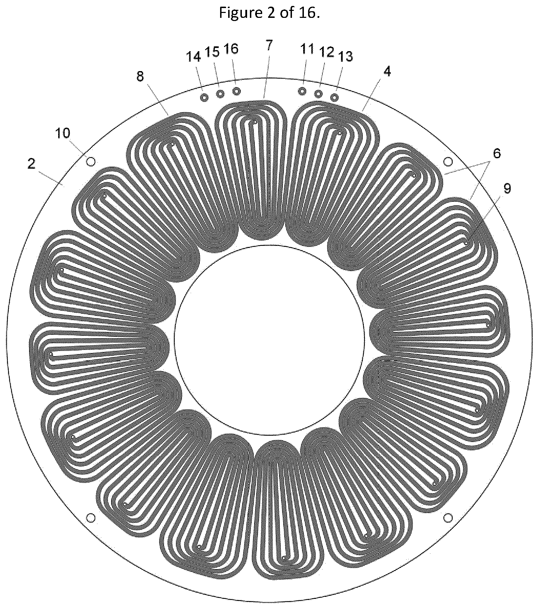

   Fig. 2 shows the second layer of the multilayer PCB with the mating parts of the coils of the phase A stator winding intended for the conventional type of the axial electric machine.
Figure 3.

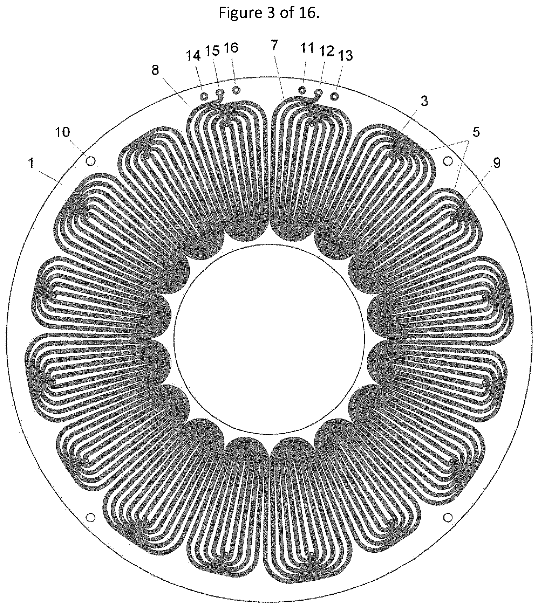

   Fig. 3 shows the third layer of the multilayer PCB with the reference parts of the coils of the phase B stator winding intended for the conventional type of the axial electric machine.
Figure 4.

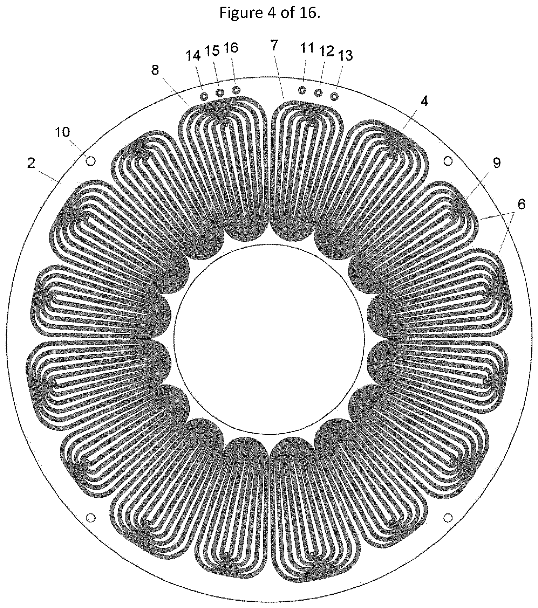

   Figure 4 shows the fourth layer of the multilayer PCB with the mating parts of the coils of the phase B stator winding intended for the conventional type of the axial electric machine.
Figure 5.

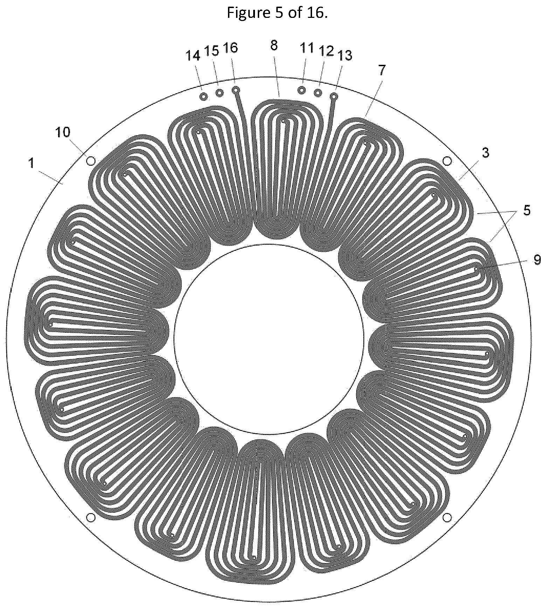

   Fig. 5 shows the fifth layer of the multilayer PCB with the reference parts of the coils of the phase C stator winding intended for the conventional type of the axial electric machine.
Figure 6.

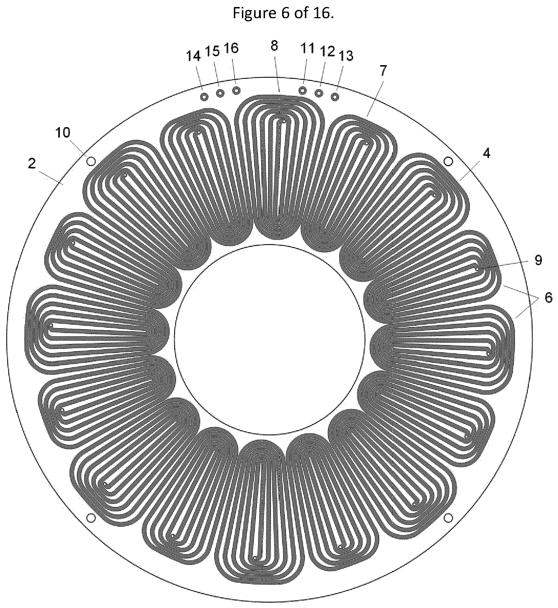

   Fig. 6 shows the sixth layer of the multilayer PCB with the mating parts of the coils of the phase C stator winding intended for the conventional type of the axial electric machine.
Figure 7.

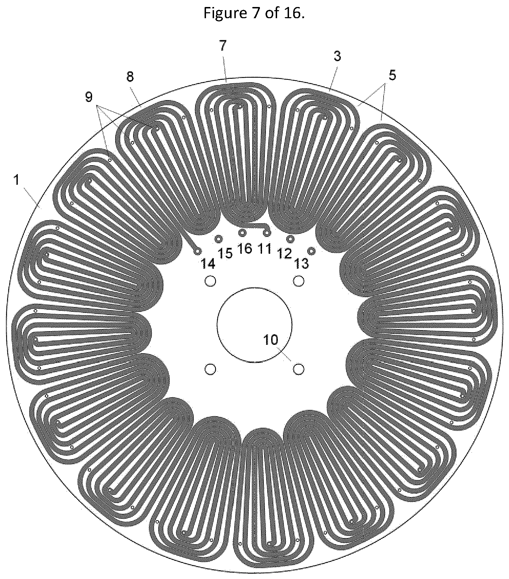

   Fig. 7 shows the first layer of the multilayer PCB with the reference parts of the coils of the phase A stator winding intended for the inverted type of the axial electric machine.
Figure 8.

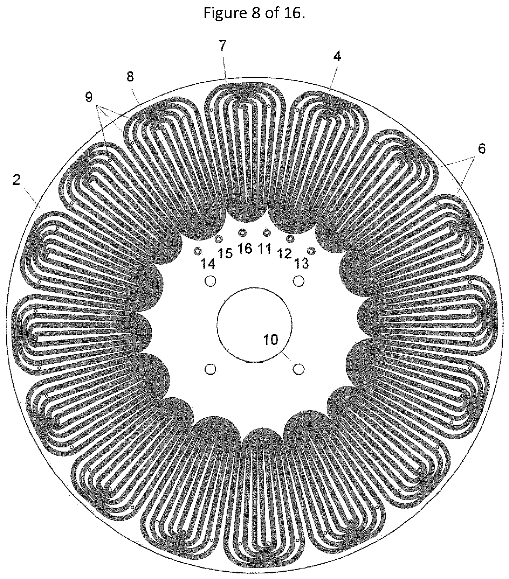

   Fig. 8 shows the second layer of the multilayer PCB with the mating parts of the coils of the phase A stator winding intended for the inverted type of the axial electric machine.
Figure 9.

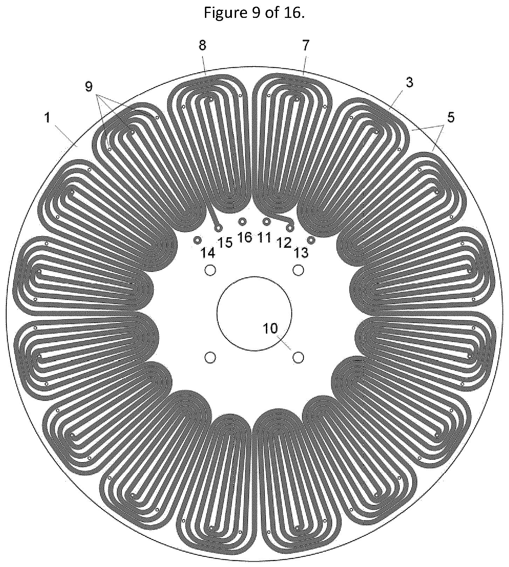

   Fig. 9 shows the third layer of the multilayer PCB with the reference parts of the coils of the phase B stator winding intended for the inverted type of the axial electric machine.
Figure 10.

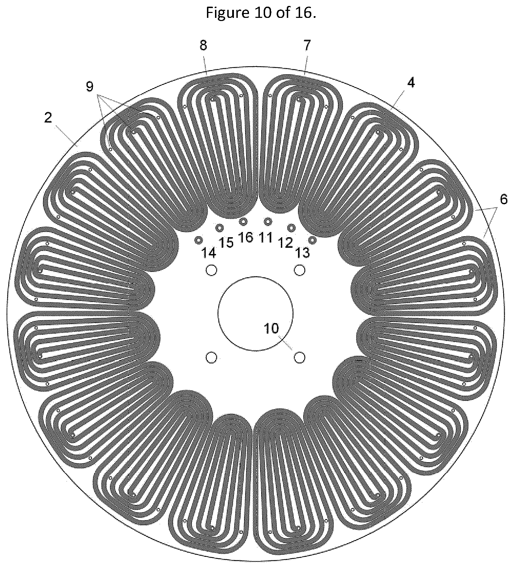

   Fig. 10 shows the fourth layer of the multilayer PCB with the mating parts of the coils of the phase B stator winding intended for the inverted type of the axial electric machine.
Figure 11.

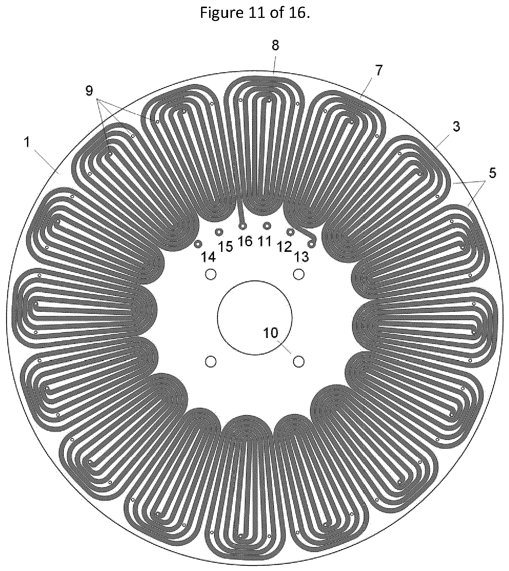

   Fig. 11 shows the fifth layer of the multilayer PCB with the reference parts of the coils of the phase C stator winding intended for the inverted type of the axial electric machine.
Figure 12.

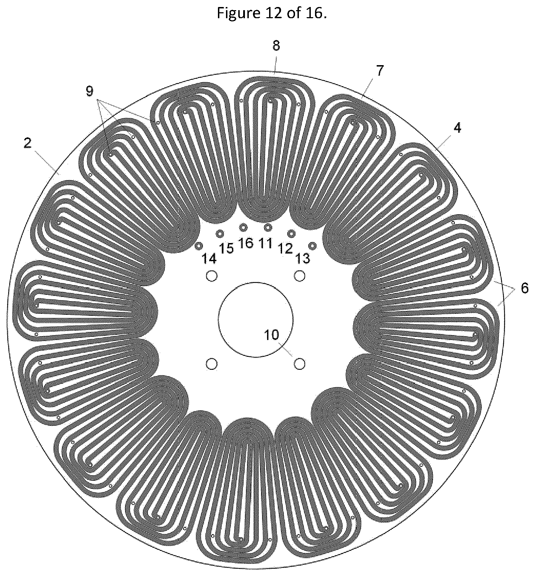

   Fig. 12 shows the sixth layer of the multilayer PCB with the mating parts of the coils of the phase C stator winding intended for the inverted type of the axial electric machine.
   The following drawings are presented for a comparative analysis of the claimed stator winding and classic concentric PCB stator winding with the number of coils in the winding equal to the number of pole pairs of the electric machine (including the solution used in the prototype [3]).
Figure 13.

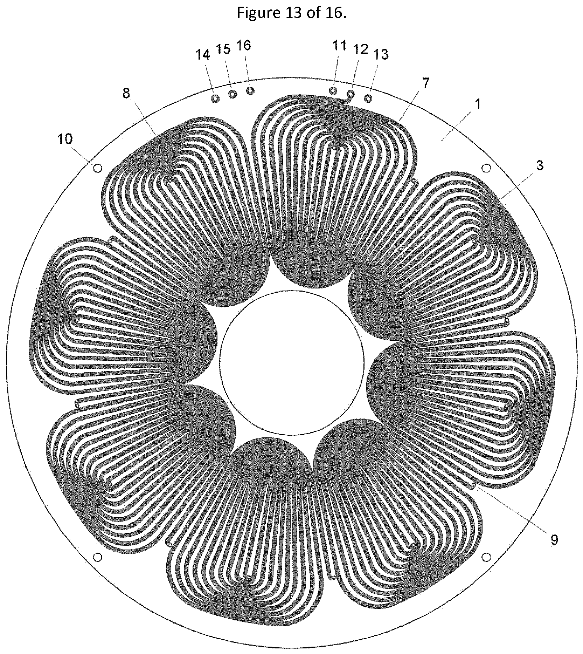

   Figure 13 shows the main layer of the phase B classic concentric PCB stator winding with an additional angular offset of 90 electrical degrees.
Figure 14.

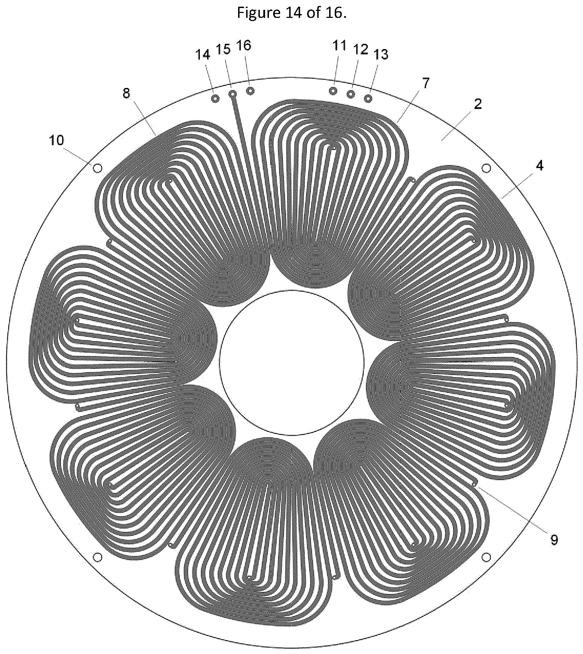

   Figure 14 shows the complementary layer of the phase B classic concentric PCB stator winding with an additional angular offset of 90 electrical degrees.
Figure 15.

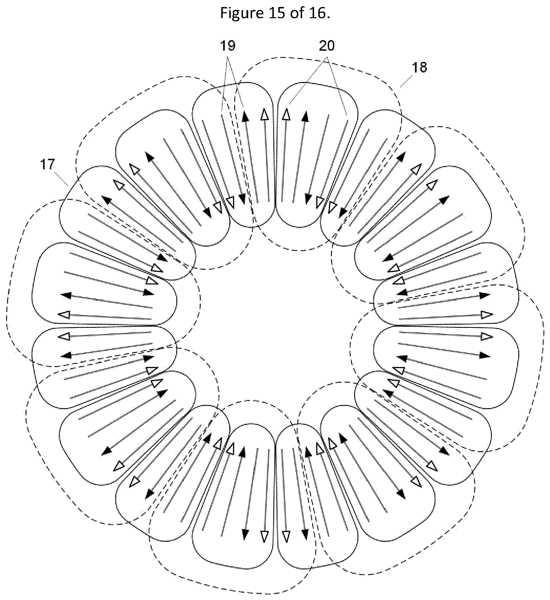

   Fig. 15 shows the comparative diagram of the claimed and classical concentric phase windings with designations of the clusters of co-directional active parts of coil's turns and with an additional angular offset of 90 electrical degrees applied for both windings.
Figure 16.

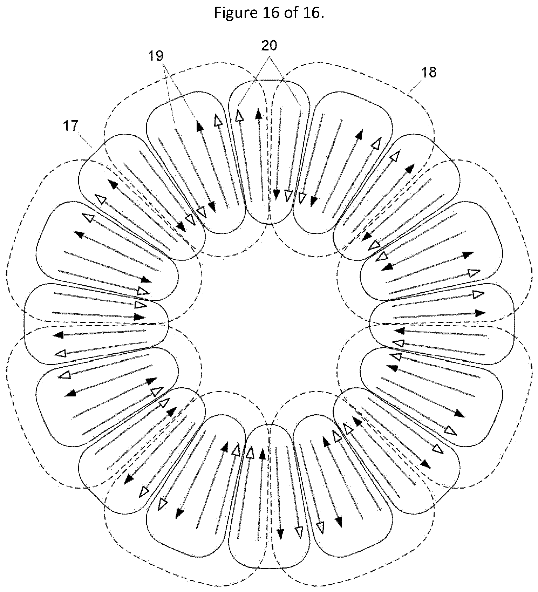

   Fig. 16 shows the comparative diagram of the claimed and classical concentric phase windings with designation of the clusters of co-directional active parts of coil's turns, without an additional angular offset and symmetrical coils arrangement in both windings.

In the specified figures:
1 - the main layer of the phase winding;
2 - the complementary layer of the phase winding;
3 - the reference part of the phase winding coil;
4 - the mating part of the phase winding coil;
5 - a pair of reference parts of the phase winding coils;
6 - a pair of mating parts of the phase winding coils;
7 - the first coil of the phase winding;
8 - the last coil of the phase winding;
9 - connecting metallized (through) hole (or via) between the reference and the mating parts of the coil;
10 - mounting hole;
11 - output terminal of the beginning of the phase A winding;
12 - output terminal of the beginning of the phase B winding;
13 - output terminal of the beginning of the phase C winding;
14 - output terminal of the end of the phase A winding;
15 - output terminal of the end of the phase B winding;
16 - output terminal of the end of the phase C winding;
17 - external outline of the coil of the claimed phase winding;
18 - external outline of the coil of the classic concentric phase winding;
19 - a cluster of co-directional active parts of coil's turns on the main layer of the phase winding;
20 - a cluster of co-directional active parts of coil's turns on the complementary layer of the phase winding.

### Detailed Description

The implemented topology of the coils in the phase winding and the connections between them allows to arrange winding directions of turns in any adjacent coils in the winding as mirror-symmetric to each other, so that the full coverage of the width of one pole of the electric machine would be achieved by two adjoining halves of any nearby coils with co-directional clusters of radial active parts of turns in these coils - and not by a half of the one coil with the co-directional parts of turns in the classic concentric PCB winding with the number of coils equal to the number of pole pairs, including the prototype [3].

The topology provided by the invention is achieved by counter-series connection of identical coils in the phase winding, when the end of first coil is connected not to the beginning of the next one, but to its end, and the beginning of the second coil - to the beginning of the third one, and so on. Thus, the conditional wiring direction of every third coil aligns with the first one, while adjacent coils are mirror-symmetric to each other.

Therefore, to maintain the basic electrical characteristics of the winding, the number of turns in the coil may be halved. This reduction leads to a significant contraction of the length of the passive parts of the coil, such as end-winding or frontal parts and coils overhang, which stand out of the magnets' active zone and are directed non-radially and, accordingly, do not contribute to the electromagnetic interaction within the electric machine.

The total length of the passive parts of the coil when using the concentric type of PCB winding topology closely follows a pattern similar to a sum of arithmetic progression (with minor variations related to coil's turns configuration) and depends quadratically on the number of coil's turns.

However, the computed reduction in passive parts length of the phase winding, which would be close to twofold when implementing claimed topology with the number of coils equal to the number of pole pairs and doubling the number of coils against classic concentric winding, is slightly diminished due to the presence of an additional PCB jumper connecting adjacent coils. In practice, the length of the passive parts of the phase winding is typically reduced by a factor of 1.7-1.9, depending on the shape of the jumper, coils topology, track widths, number of turns in the coil, etc.

In order to use the entire multilayer PCB area in the most efficient way to accommodate the stator winding, optimize the design of the winding and reduce the number of internal connections in the claimed invention, the winding of each phase is placed on two layers of the PCB - the main and the complementary. Accordingly, each coil consists of the reference part on the main layer of the PCB and the mating part on the complementary layer, which allows to implement the required connection of coils in the winding in a counter-series manner as described earlier, while doubling the number of turns in the coil compared to only a part of the coil on one layer. The connection of the reference and mating parts of the coil on different layers of the PCB is accomplished using a metallized through hole in the center of the concentric coil.

The design of the PCB multiphase stator winding in the claimed invention implies the possibility to integrate several multilayer PCBs into a unified stator winding by connecting solitary PCBs in series and/or in parallel, for example, to increase the electromotive force (EMF) by sequentially growing the number of turns of the winding or rising the rated current due to parallel connection and expanding the cross-sectional area of the conductive track of the PCB stator winding. It is relevant to perform the following actions.

For series interconnection, every second connected PCB is firstly to be turned upside down, then to match and to connect the output terminals of the PCBs located one above the other, for example, by soldering and in accordance with the following model: the end of the phase winding PCB1 (where "1" means the ordinal number of the connected PCB) - the end of the inverted phase winding PCB2, the beginning of the inverted phase winding of PCB2 - the beginning of the phase winding of PCB3, the end of the phase winding of PCB3 - the end of the inverted phase winding of PCB4 and further, if necessary.

For parallel interconnection, the cognominal output terminals are matched and then connected of the beginning and the end of the phase windings of several PCBs, for example, by soldering.

The possibility of series connection as described above is provided by an additional angular offset of each phase winding by 90 degrees relative to such a symmetrical position of the stator winding, in which an upside down flip causes a change in the phase shift of the winding of the first phase, equal to the phase shift of the winding of the last phase, and vice versa. Thus, for a three-phase system, the shift of phase A relative to phase B after the flip will change from -120 electric degrees to +120, for phase C from +120 to -120 electric degrees, and for phase B the flip will be indifferent, the EMF vector of phase B after the flip will remain unchanged. This position of the winding is further called symmetrical.

In the claimed invention, flipping upside down is carried out by turning the PCB over by 180 degrees around the axis passing in the middle between the output terminals of the beginning and the end of the phase windings to ensure matching of the position of the output terminals with other PCBs after the flip. The position of the phase windings on the PCB is chosen in such a way as to provide the required additional angular offset of 90 electrical degrees relative to the symmetrical position. It should be noted that the identification of the phases and output terminals of the phase windings after the flip will be determined by the actual spatial position and phase shifts of the windings and not by the original names. As a result of turning PCB over, the following changes will take place:
the output terminals of the beginnings of all phase windings will be converted to the ends, and vice versa;
the EMF vector of the phase B winding will change its direction to the opposite one due to a resulting shift of 180 electrical degrees between the positions before and after the flip;
the winding and the output terminals of phase A after the flip will be converted to the winding and terminals of phase C, and vice versa;
the EMF vectors of the windings of phases A and C, renamed after the transformation, will change their direction to the opposite due to a resulting shift of 180 electrical degrees with respect to the EMF vectors of the unturned windings A and C.

Thus, by using the topology of PCB stator winding coils proposed in the claimed invention with the number of coils equal to the number of poles of an electric machine, compared with the classic concentric PCB winding topology and the prototype [3], the following changes are achieved:
- decrease of the length of the coils and phase windings as a whole by the amount of the reduced by 1.7-1.9 times length of the passive parts of the coils;
- contraction of the overall dimensions of the coils and the winding as a whole along its width by double value of the width of being reduced tracks and corresponding inter-turn gaps of the coils, except added width of one track used as a PCB jumper between adjacent coils;
- as well as a decrease of resistance of the winding by a value proportional to the reducing length of the passive parts that are not involved in electromagnetic interaction.

At the same time, the design of the winding, in particular the location of the phase windings and their output terminals, provide the possibility of series and/or parallel connection of several PCBs into a unified stator multiphase winding.

### Description of embodiments

The stator of the conventional (non-inverted) type axial electric machine with eight pole pairs contains a three-phase winding on a six-layer PCB, and each phase winding comprises sixteen (according to the number of poles) concentric coils and is placed on two layers - the main 1 and complementary 2 (phase A - Fig. 1 and Fig. 2, phase B - Fig. 3 and Fig. 4, Phase C - Fig. 5 and Fig. 6) containing the reference 3 and the mating 4 parts of the phase winding coils connected by means of metallized through holes 9 in the center of the coils.

On the main layer 1, the reference parts of the coils 3 are combined into pairs 5 and connected by jumpers in a counter-series manner.

The jumper on the main layer 1 between the reference parts 3 of the first 7 and last 8 coils of the phase winding has been replaced by two conductive tracks to the output terminals of the beginning and the end of the phase winding: phase A has the output terminals of the beginning of the phase winding 13 and the end of the winding 16, phase B has 14 and 17, and phase C has 15 and 18, respectively.

Similarly, on the complementary layer 2, the mating parts of coils 4 are combined into other pairs 6 and connected by jumpers in a counter-series manner.

The winding of phase A is shifted by +120 electrical degrees against the winding of phase B, and the winding of phase C relative to B by -120 electrical degrees.

For further convenience, the numbering sequence of phase winding coils from the first 7 to the last 8 ones is set clockwise.

A six-layer PCB can be made, for example, from fiberglass, specialized polyester resins and copper foil in accordance with the standard multilayer PCB production technology.

Mounting holes 10 are placed along the outer edge of the ring-shaped six-layer PCB. The given example of a six-layer PCB has the external diameter of 256 mm and the inner diameter of the ring of 92 mm.

Phase winding coils with a number equal to the number of poles (Fig. 1-6) are formed by electrically conductive copper tracks with a width of 1.91 mm and a thickness of 0.105 mm, separated from each other by a technological inter-turn gap of 0.4 mm.

Each concentric coil contains five turns of tracks on both layers - on the reference part 3 of the main layer 1 and on the mating part 4 of the complementary layer 2.

The winding direction of turns in the first coil of the pair 5 on the main layer 1 with the reference part 3 (coils with even numbers on layers 1, 3, 5 of multilayer PCB in Fig 1, 3, 5 respectively) is set clockwise from the center of the coil, and in the second coil of the pair (coils with odd numbers) - counterclockwise to the center.

On the complementary layer 2 with the mating part 4 (layers 2, 4, 5 of multilayer PCB in Fig 2, 4, 6 respectively) the winding direction is reversed: in the first coil of the pair 6 (coils with odd numbers) - out from the center counterclockwise, the second coil of the pair 6 (coils with even numbers) - to the center clockwise.

The winding direction of turns in the reference part 3 of the first coil 7 in the phase winding is set counterclockwise to the center of the coil and on the mating part 4 - out from the center, the last coil 8 - out from the center clockwise on the reference 3 and to the center on the mating part 4.

To analyze the achieved technical results, the table below compares the overall dimensions of the multilayer PCB, the parameters of the conductive tracks, the length of the active and passive parts of the phase winding coils for the claimed invention and for the classic concentric phase winding with the number of coils equal to the number of machine's pole pairs.

By comparison, the windings of phase B are taken, shown in Fig. 3 and Fig. 4 of the claimed invention and Fig. 13 and Fig. 14 for classic concentric winding.

| Phase winding parameters | Phase winding with 16 coils of the claimed invention | Phase winding with 8 coils (classical concentric winding) |
|---|---|---|
| Number of coils in phase winding | 16 | 8 |
| Number of pole pairs | 8 | 8 |
| Number of turns in the coil | 10 | 20 |
| Number of turns in the phase winding | 160 | 160 |
| External diameter of ring-shaped PCB | 254 mm | 276 mm |
| Inner diameter of ring-shaped PCB | 92 mm | 70 mm |
| Total length of the phase winding tracks | 22 248 mm | 28773 mm |
| Total length of the active parts of coils in the phase winding | 14 400 mm | 14 400 mm |
| Total length of the passive parts of coils in the phase winding | 7 848 mm | 14373 mm |
| Width of the track | 1.91 mm | 1.88 mm |
| Width of the inter-turn gap | 0.4 mm | 0.4 mm |

Additionally, Fig. 15 shows a comparative diagram of both types of windings with the coils' external outline and the winding directions of turns in the coils of the phase winding. Thus, the external outline of the coil winding 17 of the claimed invention is shown as a solid line, and a dashed line is used to outline the coil 18 of the classic concentric winding with the number of coils equal to the number of pole pairs.

The active and co-directional radial parts of the coils are grouped into clusters for ease of display and are shown in Fig. 15 as arrows 19 and 20, where the arrow 19 represents a cluster of active and co-directional parts of five turns of the reference part 3 of the coil, and the arrow 20 represents a cluster of co-directional parts of five turns of the mating part 4 of the coil. The overlaid coils' outlines in Fig. 15 clearly show that the two adjoining halves of any nearby coils of the phase winding of the claimed invention always form a section of four co-directional arrows, which corresponds, as previously determined, to a group of active co-directional parts of twenty turns and is identical to the coil of the phase winding of the classic concentric winding with the number of coils equal to the number of pole pairs and with same twenty turns in each coil, with the only difference, being that the side edges of the coils of both types are offset between themselves by 90 electrical degrees. Thus, the proposed topology of phase winding coils with a number of coils equal to the number of poles, according to its electromagnetic parameters (number of turns per pole, length and location of active radial parts of coils' turns, width of tracks, etc.) is absolutely equivalent to the classic concentric winding with a number of coils equal to the number of pole pairs.

However, a comparison of the overall dimensions and the electrical parameters of the windings of both types clearly indicates the significant advantages of the phase winding of the claimed invention with the number of coils equal to the number of poles of the electrical machine. Thus, the overall width (the difference between the radii of the outer and inner edges of the stator winding of an axial electric machine) of the winding of the invention is 1.27 times or 21.4% less than the same width of the classic concentric winding with the number of coils equal to the number of pole pairs. The length of the coils and, accordingly, the value of resistance of the phase winding is reduced by 1.29 times or by 22.7%, the length of the passive parts is reduced by 1.83 times or by 45.4%. Additionally, the proposed topology of the phase winding coils of the claimed invention allowed to increase the width of the conductive track by 1.6%. This will additionally affect the overall reduction of resistance of the winding.

In order to integrate the three-phase winding placed on solitary 6-layers PCB and presented as an example in this invention in series and/or in parallel with other identical PCBs into a unified stator winding, the output terminals of the beginnings and the ends 11-16 of the phase windings is properly connected, as described above.

A parallel interconnection of several PCBs does not require detailed description. The output terminals 11-16 of one PCB are connected to the cognominal terminals of the beginning and the end of the phase windings of another PCB using jumpers and soldering.

For series interconnection of several PCBs, every second connected PCB is firstly turned upside down to obtain an angular offset of EMF vector by 180 electrical degrees and, accordingly, a reversed polarity of the PCB, and then to accomplish a direct joining of the terminals of the beginning (or the end) of phase windings located one above the other. Thus, a turn over allows to replace the traditional method of a series connection scheme in accordance to the model "the end of one winding is linked to the beginning of another winding", which would require a cross interconnection between the terminals, by the model "the end of the phase winding PCB1 is linked to the end of the inverted phase winding PCB2 and then the beginning of the inverted phase winding PCB2 - to the beginning of the phase winding PCB3, the end of the phase winding PCB3 - the end of the inverted phase winding PCB4", and so on.

The above embodiment may be implemented such that the turned over PCB has the polarity of the EMF vector reversed, which is realized by the angular offset of 180 electric degrees between phase windings of two contiguous PCBs. To accomplish this condition, the phase windings have an additional angular offset of 90 electrical degrees relative to the symmetrical position of the winding, shown in Fig. 16 on the example of phase B of a three-phase winding. The symmetrical location of the winding is relevant both for the classic concentric winding with the number of coils equal to the number of pole pairs, and for the winding of the claimed invention. And when the PCB winding in Fig. 16 is turned over relative to the vertical axis, the simultaneous changes to inverted values will take place for both winding directions of turns in clusters 19 and 20 on the referent 3 and mating 4 parts of the phase winding coils, and the polarity of the poles, which will not lead to a change in the polarity of the EMF.

The phase B winding being shifted on +90 electrical degrees towards the symmetrical position is shown in the comparative diagram in Fig. 15, as well on the drawings of the layers in Fig. 3 and Fig. 4 of the claimed invention and Fig. 13 and Fig. 14 of the classic concentric winding. A turn over of the PCB winding will allow to obtain the required angular offset of 180 electrical degrees between phase windings of two contiguous PCBs.

Fig. 7-12 show a variant of the PCB stator winding for the inverted type of the axial electric machine. The key distinction of this type of an electric machine lies in the fact that the inner stator is mounted on the shaft which is fixed on the basis, while the outer rotor is integrated into external housing rotating around a fixed shaft. Besides that, there are some additional features and benefits which lead to a relatively wide usage of this inverted type machine as an axial alternator for wind and hydro turbines or in-wheel direct drive motor for electric vehicles.

So, with similar parameters, as with the stator winding of the conventional type of axial machine shown on layers in Fig. 1-6, the outer diameter of the six-layer PCB for the stator winding of the inverted type of machine is smaller and in the given example equals 240 mm instead of 254 mm. This and other similar features of the winding shown in Fig. 7-12 make it possible to exploit the area of the PCB in the most efficient way.

The proposed topology of the three-phase stator winding of the inverted type of the axial electric machine, shown in Fig. 7-12, also offers the most practical option for the arrangement of metallized through holes 9.

The connection of the stator phase windings in a "star" or "delta" is made by connecting the output terminals 11-16.

Thus, the proposed PCB multiphase stator winding with a number of coils equal to the number of poles of an electric machine allows to minimize the length of coils and entire phase windings by significant reduction of the length of the passive parts and the overall width of the stator winding, as well as to substantial decrease of the winding resistance, thereby reducing heat losses and increasing the overall efficiency of the stator winding.

## Claims

1. A multiphase stator winding implemented on a printed circuit board (PCB), the PCB being a multilayer PCB with electrically conductive tracks arranged in series-connected coils, thereby forming a plurality of phase windings, each phase winding being placed on two layers of the multilayer PCB,
wherein the electrically conductive tracks of each phase winding are grouped into identical coils according to a number of electric machine poles;
each coil comprises a reference part (3) on a main layer (1) of the PCB phase winding and a series-connected mating part (4) on a complementary layer (2) of the PCB phase winding;
the reference (3) and mating parts (4) of each coil are connected with corresponding parts of previous and next coils, forming related pairs (5, 6) on a same layer and closing an electrical series circuit of coils into a phase winding;
and wherein said reference (3) and mating parts (4) of each coil except the said first (7) and last coils (8) are connected with corresponding parts of previous and next coils, thereby forming related pairs (5, 6) on a same layer and closing an electrical series circuit of coils into a phase winding;
except the said beginnings of the first (7) and the last coils (8), each of the said coils is connected in a counter-series manner where the beginning of one coil is connected to the beginning of a next coil, and the end of one coil is connected to the end of an adjacent coil,
**characterized in that**
beginnings of first (7) and last coils (8) in a given phase winding located on the main layer (1) are connected to output terminals of the beginning (11, 12, 13) and the end (14, 15, 16) of the phase winding, respectively,
and **in that**
it comprises more than one multilayer PCB, wherein each phase winding is made with an additional angular offset of 90 electrical degrees for series and/or parallel connection of the phase windings of another identical multilayer PCB, the several PCB being integrated into a single unified stator by means of the connection of output terminals of the several PCB.

2. A multiphase stator winding according to the previous claim wherein at least one of the output terminals is located above and connected to one other output terminal.

3. A multiphase stator winding according to any of the preceding claims wherein
the said PCB is a ring-shaped PCB.

4. A multiphase stator winding according to the previous claim wherein
output terminals are located on a ring-shaped PCB within an area between an outer edge of such PCB and an external border of a phase winding.

5. A multiphase stator winding according to claim 3 wherein
output terminals are located on a ring-shaped PCB within an area between an inner edge of such PCB and the internal border of a phase winding.

6. A multiphase stator winding according to any of the preceding claims wherein
the stator winding is made as a planar unfolded winding on a respective PCB.

7. Use of the multiphase stator winding of any of the preceding claims in an axial or linear motor or alternator.

8. Use according to the previous claim wherein the said motor is provided in an electric vehicle or a controlled electrical drive.

9. Use according to any of the claims 7-8 wherein the alternator is provided in a wind turbine, hydro generator, or mobile or mounted generator in a power propulsion system.

## Patentansprüche

1. Mehrphasige Statorwicklung, die auf einer Leiterplatte (PCB) realisiert ist, wobei die Leiterplatte eine mehrschichtige Leiterplatte ist, auf der elektrisch leitende Leiterbahnen in reihengeschalteten Spulen angeordnet sind, wodurch eine Vielzahl von Phasenwicklungen gebildet wird, wobei jede Phasenwicklung auf zwei Schichten der mehrschichtige Leiterplatte angeordnet ist,
wobei die elektrisch leitenden Leiterbahnen jeder Phasenwicklung entsprechend der Anzahl der Pole der elektrischen Maschine zu identischen Spulen gruppiert sind;
jede Spule umfasst einen Referenzteil (3) auf einer Hauptschicht (1) der Leiterplatten-Phasenwicklung und einen in Reihe geschalteten Gegenstückteil (4) auf einer komplementären Schicht (2) der Leiterplatten-Phasenwicklung;
der Referenzteil (3) und der Gegenstückteil (4) jeder Spule sind mit entsprechenden Teilen der vorhergehenden und nachfolgenden Spulen verbunden, wodurch auf derselben Schicht zugehörige Paare (5, 6) gebildet werden und ein elektrischer Reihenschaltkreis aus Spulen zu einer Phasenwicklung geschlossen wird;
und wobei die genannten Referenzteil (3) und Gegenstückteil (4) jeder Spule mit Ausnahme der genannten ersten (7) und letzten Spule (8) mit entsprechenden Teilen der vorhergehenden und nachfolgenden Spulen verbunden sind, wodurch auf derselben Schicht zugehörige Paare (5, 6) gebildet und ein elektrischer Reihenschaltkreis der Spulen zu einer Phasenwicklung geschlossen wird;
mit Ausnahme der genannten Anfänge der ersten (7) und der letzten Spule (8) ist jede der genannten Spulen gegenphasig in Reihe geschaltet, wobei der Anfang einer Spule mit dem Anfang einer nächsten Spule verbunden ist und das Ende einer Spule mit dem Ende einer benachbarten Spule verbunden ist ,
**dadurch gekennzeichnet, dass**
die Anfänge der ersten (7) und letzten Spule (8) in einer bestimmten Phasenwicklung, die sich auf der Hauptschicht (1) befindet, jeweils mit den Ausgangsanschlüssen des Anfangs (11, 12, 13) bzw. des Endes (14, 15, 16) der Phasenwicklung verbunden sind,
und dadurch,
sie mehr als eine mehrschichtige Leiterplatte umfasst, wobei jede Phasenwicklung mit einem zusätzlichen Winkelversatz von 90 elektrischen Grad für die Reihen- und/oder Parallelschaltung der Phasenwicklungen einer weiteren identischen mehrschichtigen Leiterplatte ausgeführt ist, wobei die mehreren Leiterplatten durch die Verbindung der Ausgangsanschlüsse der mehreren Leiterplatten zu einem einzigen einheitlichen Stator integriert sind.

2. Mehrphasige Statorwicklung nach dem vorstehenden Anspruch, wobei mindestens einer der Ausgangsanschlüsse oberhalb eines anderen Ausgangsanschlusses angeordnet und mit diesem verbunden ist.

3. Mehrphasige Statorwicklung nach einem der vorstehenden Ansprüche, wobei
die genannte Leiterplatte eine ringförmige Leiterplatte ist.

4. Mehrphasige Statorwicklung nach dem vorstehenden Anspruch, wobei
die Ausgangsanschlüsse befinden sich auf einer ringförmigen Leiterplatte in einem Bereich zwischen einer Außenkante dieser Leiterplatte und einer Außenbegrenzung einer Phasenwicklung.

5. Mehrphasige Statorwicklung nach Anspruch 3, wobei
die Ausgangsanschlüsse auf einer ringförmigen Leiterplatte in einem Bereich zwischen einer Innenkante dieser Leiterplatte und der inneren Begrenzung einer Phasenwicklung angeordnet sind.

6. Mehrphasige Statorwicklung nach einem der vorstehenden Ansprüche, wobei
die Statorwicklung als ebene, entfaltete Wicklung auf einer entsprechenden Leiterplatte ausgebildet ist.

7. Verwendung der Mehrphasige Statorwicklung nach einem der vorstehenden Ansprüche in einem Axial- oder Linearmotor oder einem Wechselstromgenerator.

8. Verwendung nach dem vorstehenden Anspruch, wobei der Motor in einem Elektrofahrzeug oder einem geregelten elektrischen Antrieb vorgesehen ist.

9. Verwendung nach einem der Ansprüche 7-8, wobei der Wechselstromgenerator in einer Windkraftanlage, einem Wasserkraftgenerator oder einem mobilen oder fest installierten Generator in einem Antriebssystem vorgesehen ist.

## Revendications

1. Enroulement de stator multiphasé réalisé sur un circuit imprimé (PCB), le PCB étant un PCB multicouche avec des pistes électriquement conductrices agencées en bobines connectées en série, formant ainsi une pluralité d'enroulements de phase, chaque enroulement de phase étant disposé sur deux couches du PCB multicouche,
dans lequel les pistes électriquement conductrices de chaque enroulement de phase sont regroupées en bobines identiques en fonction d'un nombre de pôles d'une machine électrique ;
chaque bobine comprend une partie de référence (3) sur une couche principale (1) de l'enroulement de phase du PCB et une partie homologue (4) connectée en série sur une couche complémentaire (2) de l'enroulement de phase du PCB ;
les parties de référence (3) et homologue (4) de chaque bobine sont connectées à des parties correspondantes des bobines précédente et suivante, formant des paires associées (5, 6) sur une même couche et fermant un circuit électrique en série de bobines pour constituer un enroulement de phase ;
et dans lequel lesdites parties de référence (3) et homologue (4) de chaque bobine, à l'exception desdites première (7) et dernière (8) bobines, sont connectées à des parties correspondantes des bobines précédente et suivante, formant ainsi des paires associées (5, 6) sur une même couche et fermant un circuit électrique en série de bobines pour constituer un enroulement de phase ;
à l'exception des débuts des première (7) et dernière (8) bobines, chacune desdites bobines est connectée en série-opposition, de sorte que le début d'une bobine est connecté au début d'une bobine suivante, et la fin d'une bobine est connectée à la fin d'une bobine adjacente,
**caractérisé en ce que**
les débuts des première (7) et dernière (8) bobines d'un enroulement de phase donné, situés sur la couche principale (1), sont connectés respectivement à des bornes de sortie du début (11, 12, 13) et de la fin (14, 15, 16) de l'enroulement de phase,
et **en ce qu'**il
comprend plus d'un PCB multicouche, chaque enroulement de phase étant réalisé avec un décalage angulaire supplémentaire de 90 degrés électriques pour une connexion en série et/ou en parallèle des enroulements de phase d'un autre PCB multicouche identique, les différents PCB étant intégrés pour former un stator unique unifié au moyen de la connexion des bornes de sortie des différents PCB.

2. Enroulement de stator multiphasé selon la revendication précédente, dans lequel au moins une des bornes de sortie est située au-dessus d'une autre borne de sortie et connectée à celle-ci.

3. Enroulement de stator multiphasé selon l'une quelconque des revendications précédentes, dans lequel ledit PCB est un PCB de forme annulaire.

4. Enroulement de stator multiphasé selon la revendication précédente, dans lequel les bornes de sortie sont situées sur un PCB de forme annulaire dans une zone comprise entre un bord extérieur dudit PCB et une limite externe d'un enroulement de phase.

5. Enroulement de stator multiphasé selon la revendication 3, dans lequel les bornes de sortie sont situées sur un PCB de forme annulaire dans une zone comprise entre un bord intérieur dudit PCB et la limite interne d'un enroulement de phase.

6. Enroulement de stator multiphasé selon l'une quelconque des revendications précédentes, dans lequel l'enroulement de stator est réalisé sous la forme d'un enroulement développé plan sur un PCB respectif.

7. Utilisation de l'enroulement de stator multiphasé de l'une quelconque des revendications précédentes dans un moteur ou un alternateur axial ou linéaire.

8. Utilisation selon la revendication précédente, dans laquelle ledit moteur est prévu dans un véhicule électrique ou dans un entraînement électrique commandé.

9. Utilisation selon l'une quelconque des revendications 7 à 8, dans laquelle l'alternateur est prévu dans une éolienne, un générateur hydroélectrique ou un générateur mobile ou monté dans un système de propulsion électrique.
